**Europäisches Patentamt**

**European Patent Office**

**Office européen des brevets**

(19)

(11) Veröffentlichungsnummer : **0 182 937**
**B1**

(12) **EUROPÄISCHE PATENTSCHRIFT**

(45) Veröffentlichungstag der Patentschrift :
02.03.88

(51) Int. Cl.⁴ : **C 10 C   3/00**, C 08 J 11/04,
**C 08 L 95/00**

(21) Anmeldenummer : **84114535.2**

(22) Anmeldetag : **30.11.84**

(54) **Verfahren zur Herstellung von Gussasphalt unter Mitverwendung von Asphaltbeton-Recycling-Material sowie nach diesem Verfahren hergestellter Gussasphalt.**

(43) Veröffentlichungstag der Anmeldung :
04.06.86 Patentblatt 86/23

(45) Bekanntmachung des Hinweises auf die Patenterteilung : 02.03.88 Patentblatt 88/09

(84) Benannte Vertragsstaaten :
AT BE CH DE FR GB IT LI LU NL SE

(56) Entgegenhaltungen :
EP-A- 0 114 118
US-A- 3 971 666
US-A- 4 165 184

(73) Patentinhaber : Deutsche Asphalt GmbH
Neuhaussstrasse 1
D-6000 Frankfurt am Main 18 (DE)

(72) Erfinder : Rumiz, Helmut, Dipl.-Ing.
Beethovenstrasse 21
D-7315 Weilheim/Teck (DE)
Erfinder : Milster, Klaus
In den Zolläckern 20
D-6000 Frankfurt-Seckbach (DE)
Erfinder : Uebele, Manfred
Schlierbacher Strasse 90
D-7312 Kirchheim (DE)

EP 0 182 937 B1

## Beschreibung

Die Erfindung betrifft ein Verfahren zur Herstellung von Gußasphalt, bei dem durch Umformen Asphaltbeton-Altmaterial, wie Aufbruch- oder Fräsgut, unter Zusatz definierter Anteile an Bitumen und Mineralstoffen in Gußasphalt übergeführt wird.

Die wichtigsten bisher bekannt gewordenen und auch technisch realisierten Verfahren zur Wiederverwertung verbrauchter bzw. abgenutzter Straßenbelagsmassen auf Bitumenbasis, insbesondere aus Asphaltbeton, zeichnen sich ohne Ausnahme dadurch aus, daß in einem sogenannten Rückführprozeß unter Zusatz von Frischgut das Ursprungsmaterial wieder hergestellt wird, d. h., es wird z. B. Asphaltbeton-Fräsgut mit Frischgut in einem Verhältnis zusammengeführt, das wieder Asphaltbeton ergibt. Dies ist die mehr materialtechnische Seite des Recyclings von verbrauchten Straßenbelagsmassen.

Rein verfahrenstechnisch erfolgt die Wiederverwertung derartigen Materials nach drei Prinzipien : Einmal nach dem sogenannten Reshape-Prozeß, bei dem das aufgebrochene und zerkleinerte Material ohne Zugabe von Mischgut bzw. frischem Material direkt wiederverwendet wird ; dann nach dem Repave-Prozeß, eine Art Rückformung unter Zusatz von (frischem) Mischgut ; und schließlich das Remix-Verfahren, bei dem das alte Material mit frischem Mischgut aufgefrischt und erneut verlegt wird.

Beim Reshape-Prozeß wird die verbrauchte Fahrbahndecke — die vorwiegend, jedoch nicht ausschließlich, aus Asphaltbeton besteht — z. B. mit indirekt wirkenden Heizgeräten, wie Infrarotstrahlern usw. erhitzt, aufgelockert und bei den Erhitzungstemperaturen erneut verlegt und verdichtet.

Verfahren dieser Art werden z. B. in EP-A-33 911, in EP-A-24 755 oder in US-A-4 142 803 beschrieben. Alle diese Verfahren arbeiten also ohne Zugabe von frischem Mischgut. Sie dienen praktisch nur der Regenerierung, d. h. Auflockerung und erneuter Verdichtung des abgenutzten Straßendeckenmaterials.

In ähnlicher Weise wird auch der Repave-Prozeß durchgeführt, wobei jedoch auf das nach dem Reshape-Verfahren aufbereitete und neu verlegte Altmaterial eine zusätzliche obere Schicht aus frischem Mischgut gleicher bzw. verwandter Qualität aufgebracht und beide Schichten anschließend gemeinsam verdichtet werden. Somit dient die aus rückgeformtem Altmaterial gebildete untere Schicht mehr oder weniger als Trageschicht für das neue Mischgut gleicher Zusammensetzung und gleicher rheologischer Eigenschaften. Über den Repave-Prozeß wird z. B. in « Wegen », (56/1982), Seiten 155 und 195 berichtet.

Von besonderer Bedeutung für die Wiederverwendung verbrauchter bitumenhaltiger Fahrbahnbeläge hat sich in jüngster Zeit das Remix-Verfahren erwiesen, bei dem das aufgebrochene, d. h. aufgelockerte bzw. abgefräste Altmaterial mit neuem Frischgut vor dem Einbau gemischt und ggf. unter Berücksichtigung der Eigenschaften des Altmaterials eine Neueinstellung erfolgt, d. h., es wird aus einer bestimmten Menge rückgeführtem Altmaterial und einer geeigneten Menge Ergänzungsmischgut ein neues Mischgut erzeugt, das in seinem Aufbau und hinsichtlich der Anforderungen an Standfestigkeit und Griffigkeit dem ursprünglich eingebauten Straßendeckenmaterial entspricht.

Es handelt sich somit hier ebenfalls um einen sogenannten Rückformprozeß, bei dem durch Zusatz von frischem Mischgut der ursprüngliche Zustand des Fahrbahnmaterials wieder hergestellt wird.

Remix-Verfahren der verschiedensten Technologien werden u. a. in US-A-4 373 961, US-A-4 165 184, US-A-4 104 736 sowie DE-A-31 09 573 und DE-A-28 13 043 beschrieben.

Allen vorstehend genannten Verfahren ist gemeinsam, daß aus dem rückgeführten, d. h. aufgebrochenen oder abgefrästen Altmaterial durch den bereits genannten Rückformprozeß neues, aber mit dem ursprünglichen Straßenmaterial identisches Material geschaffen wird, d. h., es wird z. B. ein aufgebrochener bzw. abgefräster Straßenbelag aus Asphaltbeton oder ursprünglicher Asphaltbetonqualität wieder in Asphaltbeton zurückgeführt.

Gleiches gilt für Belagsmassen auf Gußasphaltbasis. Auch hier wird — ob nach dem Reshape- oder Remix-Verfahren — eine Regenerierung vorgenommen, deren Ziel die erneute Bereitstellung von frischgutähnlichem Gußasphalt ist.

Auf diese Weise werden heute bereits erhebliche Mengen an verbrauchtem — gealtertem und erhärtetem — Straßenbelagsmaterial durch Recycling erneut verwertet und insbesondere durch den Remix-Prozeß in ein dem ursprünglichen Material verwandtes oder äquivalentes Frischgut zurückgeführt.

Gemäß der bereits erwähnten US-A-4 165 184 kann so in einem Arbeitsgang bei Verwendung eines geeigneten Mehrfach-Trommelsystems Asphaltbeton-Altmaterial in ein äquivalentes Asphaltbeton-Frischgut übergeführt werden. Im kontinuierlichen Prozeß wird das zerkleinerte Altmaterial, z. B. Fräsgut, zunächst auf eine Temperatur erheblich unterhalb des Flammpunkts der flüchtigen Bestandteile erhitzt. Gleichzeitig wird eine frisch bereitete Mischung auf Asphaltbetonbasis auf eine Temperatur gebracht, die erheblich über derjenigen des Recyclingmaterials liegt und z. B. zwischen 150 und 280 °C betragen kann. In einem weiteren Mischersystem werden nun die vortemperierten Chargen in einem Gewichtsverhältnis zueinander vermengt, daß eine Endtemperatur von ca. 80 bis 135 °C erreicht wird. Geeignete Mischungsverhältnisse Asphaltbeton-Altmaterial : Frischgut liegen zwischen 20-50 : 50-80, d. h., es werden maximal 50 % Asphaltbeton-Recycling-Material wiederverwendet, und dies insbesondere nur für kurzfristige Ausbesserungsarbeiten an Straßendecken.

Nach einem aus der US-A-3 971 666 bekannt gewordenen Verfahren ähnlicher Konzeption wird das Recycling-Material zunächst in einem rotierenden Zylinder so lange erhitzt, bis ein semiplastischer Zustand eingetreten ist. Dann wird (auf lichtoptischem Wege) der Gehalt an Bitumen in der plastifizierten Masse ermittelt und die fehlende Menge Bitumen gleicher Qualität wie im Recyclinggut ursprünglich vorhanden, ggf. zusammen mit zusätzlichen Mineralstoffen, zugesetzt. Nach erneutem Erhitzen der Mischung auf ca. 105 bis 150 °C und längerer Verweilzeit bei dieser Temperatur kann das rückgeformte Material, das dem Aufbau der ursprünglichen Straßenbelagsmasse angepaßt ist, in bekannter Weise wieder verlegt werden.

Es wird bei diesem Verfahren also der im Verlauf der Alterung (Erhärtung ; Zersetzung etc.) aufgetretene Verlust an Bitumen durch Frischbitumen ersetzt, um einen quantitativen Ausgleich zu schaffen.

Auch bei diesem Verfahren besteht die Aufgabe darin, z.B. aus unbrauchbar gewordenem Asphaltbeton einen neuen Straßenbelag aus Asphaltbeton herzustellen, d. h., es wird das Recyclinggut in ein Frischgut übergeführt, das mit dem Recyclingmaterial identisch ist, bzw. der Zusammensetzung des Altmaterials im früheren Einbaustadium entspricht.

Es hat sich in den letzten Jahren gezeigt, daß — vorwiegend bedingt durch das ständig ansteigende Verkehrsaufkommen und den damit verbundenen erhöhten Verschleiß des Fahrbahnmaterials — eine Erneuerung bzw. Instandsetzung der Fahrbahndecken in immer kürzeren Zeitabständen erforderlich wird. Hierdurch bedingt, nimmt die Menge an aufgebrochenem und zunächst für die Rückformung vorgesehenem Altmaterial ständig zu, so daß dieses Material nicht nur insgesamt kaum noch verwertet werden kann, es verschlechtert sich auch die Qualität von rückgeführtem Asphaltbeton (Gemisch aus Altmaterial und Frischgut) durch die sich kumulativ wiederholenden Einsätze von Altmaterial z. B. im Remix-Prozeß, da ja viele Straßendecken bereits unter Verwendung von Recycling-Material erneuert wurden.

Damit sind aber der ständigen Wiederverwendung von Altmaterial natürliche Grenzen gesetzt, so daß neue Wege gesucht werden müssen, das sich mehr und mehr anreichernde Altmaterial (Recyclinggut, z. B. Asphaltbeton-Fräsgut) anderweitig zu verwerten.

Gegenüber Asphaltbeton stellt Gußasphalt zweifellos die hochwertigere Asphaltmischung dar. Seine Anwendung — auch im Straßenbau — hat sich durch neue Verarbeitungstechnologien in der jüngsten Zeit mehr und mehr durchgesetzt. Darüberhinaus besitzt der Gußasphalt Eigenschaften, die ihm z. B. gegenüber Asphaltbeton ein viel breiteres Anwendungsspektrum eröffnen.

Nur beispielhaft sei auf den Einsatz von Gußasphalt, ggf. in modifizierter Form, im Bereich der Abdeckung von Pflasterdecken für Geh- und Radwege, für Brückenbeläge mit Dichtungsschichten aus Bitumen und/oder Metalldichtungsbahnen mit und ohne Trennschicht für den Aufbau von Estrich- und Einbettmassen bei Kunsteisbahnen und Fußbodenheizungen, Parkplätzen, Sportanlagen. Unterlagsestrichen im Wohnungsbau, Industriehallenbeläge usw. hingewiesen, wobei seine vielseitige Verwendung im Landstraßen- und Wasserbau bei weitem nicht als Abschluß dieser Einsatzmöglichkeiten zu werden ist.

Aufgabe der Erfindung ist es daher, mit Hilfe eines neuartigen Umformprozesses nach dem Remix-Verfahren ein Asphaltbeton-Altmaterial (Recycling-Material) in Gußasphalt überzuführen, d. h. aus den dem Asphaltbeton materialspezifischen Eigenschaften und Aufbau ein anderes Material zu schaffen, dessen Einsatzbereich weit über denjenigen des Asphaltbeton hinausgeht.

Hierdurch wird das im Überschuß anfallende Aufbruchmaterial (z. B. Fräsgut) aus Asphaltbeton nicht nur einer zusätzlichen, neuen Verwertung zugeführt, es wird gleichzeitig auch eine gegenüber Asphaltbeton hochwertigere Asphaltmischung gewonnen, die im Aufbau und Eigenschaften mit Gußasphalt absolut vergleichbar ist und die — überraschenderweise — einen gewissen Synergismus aufweist (Additive Wirkung des Asphaltbeton-Recycling-Materials mit Frischgut und Einstellung auf Gußasphalt) der insbesondere — aber nicht ausschließlich — beim Aufbau dünner Belagsschichten aus Gußasphalt zur Wirkung kommt.

Gegenstand der Erfindung ist somit ein Verfahren zur Herstellung von Gußasphalt unter Mitverwendung von Asphaltbeton-Recyclingmaterial nach dem Remix-Prozeß, bei dem zunächst die Bitumenqualität und -menge im Asphaltbeton-Recycling-Material ermittelt und anschließend dieses Material mit einer Bitumenqualität und -quantität sowie Mineralstoffen derart vermischt wird, daß das Asphaltbeton-Recycling-Material in Gußasphalt umgeformt wird. Dabei bestimmen die Bitumenqualität und -quantität, das Mineralspektrum und der Kornaufbau des Asphaltbeton-Recycling-Materials den Anteil an Frischgut, der unter definierten Temperatur- und Mischbedingungen zusammen mit dem Recycling-Material den Gußasphalt ergibt.

Weitere besonders vorteilhafte Merkmale und Maßnahmen des neuen Verfahrens enthalten die vom Verfahren des Hauptanspruchs abhängigen Verfahrensansprüche.

Es hat sich im Verlaufe von ganz speziellen Untersuchungen über die Qualitätsveränderung und das allgemeine Verhalten von Asphaltbeton für Straßendecken gezeigt, daß das ursprünglich eingesetzte Bitumen rein mengenmäßig nur wenig abgesunken ist, daß aber die charakteristischen spezifischen Eigenschaften der ursprünglichen Bitumenqualität nicht mehr vorhanden sind und dies nach nur kurzzeitiger Beanspruchung von wenigen Jahren oder Monaten.

So wurde beispielsweise an einem Asphaltbeton-Fräsgut festgestellt, daß bereits nach relativ kurzzeitigem Einsatz als Straßenbelag (Fahrbahndecke) auf Autobahnen das Bitumen eine Penetration von ca. 40 (100 g/5 sek./25 °C/mm) und einen Erweichungspunkt von über 55 (Ring und Kugel in °C) aufwies und somit einer durchschnittlichen Bitumenbeschaffenheit nach DIN 1995 von B 45 (vergl. « Bitumen und Asphalt Taschenbuch », 4. Auflage, 1969) entspricht.

Beim ursprünglichen Verlegen der Straßendecke aus Asphaltbeton war jedoch ein Bitumen der Penetration über 50 und einem Erweichungspunkt von 52 eingesetzt worden, was einer Bitumenqualität nach DIN 1995 von B 65 entspricht. Ähnliche Veränderungen wurden auch für den Brechpunkt nach Fraaß ermittelt. Derartige Änderungen der Beschaffenheit des Bitumens ergaben in einigen besonders schwerwiegenden Fällen, bedingt durch sehr hohes Verkehrsaufkommen, witterungsbedingten Temperaturwechsel und überaus lange Belastung Beschaffenheitsveränderungen, die — von einem ursprünglich eingesetzten Bitumen der Qualität B 65 bis B 200 (Penetration max. 160-210 ; Erweichungspunkt 37-44) zu einer Umwandlung in Bitumen B 25 (Penetration 20-30 ; Erweichungspunkt 59-67) führten.

Dieser Sachverhalt — obwohl bisher wenig beachtet — besagt eindeutig, daß es wenig sinnvoll ist, derart völlig verändertes Material (Asphaltbeton-Recyclinggut) durch Zusatz von Frischgut wieder in Asphaltbeton überzuführen, da bei einem derart starken Abfall der Bitumenqualität nur über ein Straßenbaubitumen höchster Penetration und niedrigstem Erweichungspunkt ein einigermaßen brauchbares Neumaterial geschaffen werden kann.

Andererseits — und dies ist die Erkenntnis der Erfindung — besitzt das vorstehende Bitumenqualitäten aufweisende Asphaltbeton-Recycling-Material Eigenschaften, die sich überraschenderweise hervorragend für den Aufbau von Gußasphalt eignen, da für diesen, insbesondere wenn für Außenbeläge eingesetzt, vorwiegend Bitumenqualitäten von B 45 (Penetration 35-50 ; Erweichungspunkt 54-59) und darunter bevorzugt sind.

Es ist also wenig sinnvoll, ein Recycling-Material auf (ursprünglicher) Asphaltbeton-Basis (hergestellt mit Bitumen B 65 oder B 80 oder darüber) einem Rückformprozeß unter Mischgutzugabe üblicher Asphaltbeton-Zusammensetzung zu unterwerfen, da der abgebaute Asphaltbeton hierdurch nicht verändert wird, sondern höchstens als notgedrungenes Füllmaterial wirkt.

Aber selbst bei Berücksichtigung des Grads des Beschaffenheit-Abbaus des Bindemittels (Bitumen) im Asphaltbeton-Recycling-Material, z. B. von einer ursprünglichen Penetration von ca. 70-100 auf eine solche von 35-50 und darunter, zwingt der Neuaufbau von Asphaltbeton unter Mitverwendung derartigen veränderten Recycling-Materials im Frischgut ein Bitumen einzusetzen, das erheblich höhere Werte als die vorstehend genannten aufweist, also z. B. eine Penetration von z. B. 160-210 (entspricht Bitumen B 200), um einen rückgeformten Asphaltbeton zu gewinnen, der die ursprüngliche Beschaffenheitswerte des Bitumens (z. B. B 65 oder B 80) aufweist und bei dem nennenswerte Mengen Recycling-Material eingesetzt werden können.

Außerdem stößt eine wirtschaftliche Einbringung von Asphaltbeton-Recycling-Material, also Mengen von 40 % und darüber, im Gemisch mit frischem Asphaltbeton auf erhebliche Schwierigkeiten aufgrund der unterschiedlichen Duktilitäten und Viskositäten der beiden Gemengekomponenten. Die Fließanomalien, die neben der Temperatur auch von der Konzentration und vom Dispersionszustand des Bindemittels abhängen, bestimmen u. a. den Einsatz der verschiedenen Bitumenqualitäten. Es gehört zum Wissen des Fachmanns, daß z. B. ein Bitumen B 45 für die Herstellung von Asphaltbeton als Trage- und/oder Deckschicht führ Fahrbahnen denkbar ungeeignet ist, während es andererseits für Gußasphalt, Asphaltmastix und Außenbeläge auf Gußasphaltbasis von größter Bedeutung ist.

Auf diesem Gedankengang, der sich bereits im Versuchsstadium praxisnahe hervorragend bewährt hat, baut die Erfindung auf, d. h. es wird aus dem Grad des Abbaus bzw. der Veränderung des Bitumens (und natürlich auch der fehlenden Menge) im Asphaltbeton-Recycling-Material ein Gußasphalt entwickelt, dessen Bitumenqualität im Brechpunktsbereich (Fraaß) zwischen — 6 °C (und ggf. darunter) und + 8 °C liegt und damit universell anwendbar ist.

Damit handelt es sich bei der Erfindung nicht um einen sog. « Rückformprozeß » (Asphaltbeton rückführen in Asphaltbeton), sondern um einen « Umformprozeß » (Asphaltbeton umformen in Gußasphalt).

Es versteht sich, daß für Außenbeläge — bedingt durch die gegebenen Witterungsverhältnisse — praktisch nur ein Gußasphalt infrage kommt, der einen Bitumenbrechpunkt im Bereich von — 6 °C (ggf. darunter) aufweist.

Andererseits ist ein derartiger Gußasphalt im Innenbau, also z. B. für Fußbodenestrich und ähnliche Beläge denkbar ungeeignet, da hier ein Bitumen mit Brechpunkt im Bereich von ca. 8 °C oder auch darüber erforderlich ist.

Dies besagt, daß für den Einsatz als Estrich, also für Innenbeläge, die Umformung des Asphaltbeton-Recycling-Materials in geeigneten Gußasphalt z. B. mit Hilfe von Hochvakuum-Bitumen (HVB) zweckmäßig ist. Selbstverständlich kann auch jede andere Bitumenspezies eingesetzt werden, solange der Brechpunkt und die übrigen Eigenschaftswerte (Penetration ; Erweichungspunkt etc.) dies erlauben.

Dies bedeutet, daß Hochvakuum-Bitumen beim erfindungsgemäßen Umformprozeß (Alt-Asphaltbeton in Gußasphalt) besonders für Gußasphalt im Innenbau vorgeschlagen wird, während umgekehrt dieser Gußasphalt den Einsatz im Außenbereich nur bedingt — wenn überhaupt — erlaubt, da Wintertemperaturen zum Aufreißen der Beläge führen. Umgekehrt sind für Gußasphaltzusammensetzungen, auch wenn sie durch den erfindungsgemäßen Umformprozeß erhalten wurden, alle solche ungeeignet, die für Außenbeläge aufgebaut worden sind. In solchen Fällen ist der Erweichungspunkt zu niedrig, d. h. die Penetration erreicht nicht mehr vertretbare Werte.

Aus dem Vorstehenden geht hervor, daß das erfindungsgemäße Verfahren der Umformung von Asphaltbeton-Recycling-Material in Gußasphalt unabhängig vom späteren Einsatz des Gußasphaltes ist.

4

# 0 182 937

Das Verfahren erlaubt die Variierung zwischen beiden Extremen : Außenbelag mit Bitumenqualitäten vom Brechwert im Bereich — 6 °C (z. B. Straßenbaubitumen B 45 bis B 65) und Innenbelag (Estrich usw.) mit Bitumenqualitäten vom Brechwert im Bereich + 8 °C (Hochvakuum- bzw. Hart- oder Spezial-Bitumen).

Es hat sich gezeigt, daß nach dem Verfahren der Erfindung bis zu 80 Gew.-% Asphaltbeton-Recycling-Material ohne Schwierigkeiten verarbeitet werden können, d. h. es sind nur ca. 20 % Frischgut erforderlich, um einen einwandfreien Gußasphalt zu erhalten. Schon dieses Mengenverhältnis demonstriert die Bedeutung des neuen Verfahrens, da derart hohe Menge an Asphaltbeton-Recycling-Material bisher, d. h. für den Neuaufbau von Asphaltbeton, kaum eingesetzt werden konnten.

Mit 80 Gew.-% Asphaltbeton-Recycling-Material ist im allgemeinen die oberste Grenze erreicht, weil bei noch höheren Mengen das Frischgut kaum noch in der Lage ist, fehlende oder abweichende Mengen an Bindemittel (Bitumen) und Zuschlägen unter Ausbildung von Gußasphalt aus Aphaltbeton-Recycling-Material auszugleichen. Deshalb liegen die wirtschaftlich als auch qualitativ realisierbaren prozentualen Mengenverhältnisse Asphaltbeton-Recycling-Material : Frischgut bei ca. 10-80 : 90-20.

Es sei grundsätzlich erwähnt, daß es für das erfindungsgemäße Umformverfahren Asphaltbeton-Recycling-Material in Gußasphalt keine Rolle spielt, ob der Asphaltbeton ursprünglich im Heißeinbau etwa unter Verwendung von Destillatbitumen (B 65, B 80, B 200) oder im Warmeinbau mit Verschnittbitumen (Normenbitumen plus Teeröle oder Öldestillate oder auch im Kalteinbau mit Bitumenemulsionen bzw. Kaltbitumen eingesetzt wurde. Unabhängig von der Herkunft bzw. ursprünglichen Herstellungs- und Verlegungsart des Asphaltbetons läßt sich — unter den erfindungsgemäßen Vorbehalten und Bedingungen — stets ein einwandfreier Gußasphalt aufbauen.

Ebenfalls ist es ohne Bedeutung, ob das Asphaltbeton-Recycling-Material als Aufbruch, Abtrag oder Fräsgut vorliegt. So können auch Platten in der Größenordnung ca. 50 × 70 cm oder darüber — wie sie im allgemeinen bei Aufbruch von Straßendecken usw. erhalten werden — zu Brocken von Faustgröße zerkleinert und in dieser Form direkt in den Umformprozeß eingegeben werden.

Es hat sich überraschenderweise gezeigt, daß der erfindungsgemäß aus hohen Anteilen Asphaltbeton-Recycling-Material gewonnene Gußasphalt Eigenschaften aufweist, die teilweise dem aus reinem Frischmaterial aufgebautem Gußasphalt überlegen sind.

Es wird dies auf einen gewissen Synergismus zurückgeführt, der sich einmal additiv aus den unterschiedlichen Bitumenbeschaffenheiten im Endprodukt ergibt. Außerdem scheinen auf der Basis des verdichteten, hohlraumarmen Asphaltbeton mit « härterer » Bitumenbeschaffenheit und dem angepaßten, den Ausgleich auf 100 % Endprodukt bildenden Frischgut mit veriablen Anteilen, Eigenschftsänderungen einzutreten, die für den Fachmann überraschend sind.

Zunächst kann nach dem neuen Verfahren sowohl splittreicher als auch splittarmer Gußasphalt gewonnen werden.

Weiter kann, insbesondere bei hohem Anteil an Recycling-Material, auf Feinkornsplitt im Frischgut ganz verzichtet werden.

Ausgehend vom gleichen Asphaltbeton-Recycling-Material kann allein durch die variablen Mengenanteile jede Gußasphaltqualität erzeugt werden, die sowohl für Autobahnen und Stadtstraßen (bevorzugte Bitumenart B 65-B 45) als auch für Flächen mit Standverkehr (bevorzugte Bitumenbeschaffenheit B 25) oder Hallenbeläge usw. (Mischungen aus HVB und B 45) geeignet sind.

Bei Deckschichten für Gehwege liefert der erfindungsgemäße Gußasphalt eine absolute Dichte. Die erhöhte Plastizität erweist sich für nicht ganz setzungsfreien Unterbau von Vorteil. Das neue Material ist gieß- und verstreichbar und erfordert in den meisten Fällen keine Walzarbeit. Es ist für Unterwassereinbau von Dichtungen hervorragend geeignet. Die Biegefestigkeit entspricht insbesondere im Bereich eines Altmaterialanteils von 30 bis 60 Gew.-% normalem Gußasphalt.

Von besonderer Bedeutung ist die Stabilität des erfindungsgemäßen Gußasphalts gegenüber Temperaturschwankungen sowie anhaltendem hohem und niedrigem Temperatureinfluß. Er ist daher als Estrich sowohl für Fußbodenheizungen (mit im Gußasphaltestrich verlegten, heizmittelführenden Rohren) als auch für kältemittelführende Böden, etwa für Kunsteisbahnen usw., sofern die vorstehend genannten Bedingungen der erforderlichen Bitumenqualität erfüllt werden, besonders geeignet. Dabei hat es sich überraschenderweise auch gezeigt, daß gerade in diesen Anwendungsbereichen der nach den Maßnahmen der Erfindung gewonnene Gußasphalt ohne den sonst üblichen Zusatz modifizierender Polymere verlegt werden kann, ein Vorteil, der die Gefahr negativer Einflüsse durch Kunststoffe umgeht. Langzeitversuche haben hier Ergebnisse erbracht, die bezüglich Haltbarkeit, Viskositätsverhalten, Duktilität, Reiß- und Biegefestigkeit normalem Gußasphalt in nichtsnachstehen, teilweise denselben sogar noch übertreffen.

Zur Durchführung des erfindungsgemäßen Verfahrens wird zunächst durch Probenahme (Bohrkerne) aus der alten, noch bestehenden Asphaltbetonschicht oder am abgetragenen, aufgebrochenen oder aufgefrästen alten Asphaltbeton die Bitumenqualität, d. h. der Grad der Veränderung bzw. Verhärtung festgestellt. Außerdem, wenn erforderlich, die Menge des im Recycling-Material vorhandenen Bitumens ermittelt. Die hierfür geeigneten Methoden (Untersuchung des Erweichungspunkts, Penetration, Brechpunkt etc.) sind dem Fachmann bekannt und bedürfen keine Erläuterung.

Aus den erhaltenen Daten, die ggf. den Anteil und die Korngröße bzw. Korngrößenverteilung der Zuschläge im Asphaltbeton-Recycling-Material, z. B. Fräsgut, einschließen, wied der erforderliche Anteil an Ausgleichsbitumen und die Festlegung der Zuschläge an Splitt, Sand und Kalkmehl ermittelt.

Dabei ist erneut zu betonen, daß das Frischgut, das zum Aufbau von Gußasphalt aus Asphaltbeton-Recycling-Material herangezogen wird, selbst keine Gußasphalt-Eigenschaften besitzt, sondern erst mit dem Asphaltbeton-Recycling-Material solchen liefert.

Die Erfindung wird anschließend anhand eines Beispiels näher beschrieben :

Aufgabe : Herstellung eines Gußasphalts mit einem Bitumengehalt von 7,5 bis 7,7 Gew.-%.
Penetration : 35-40 ; Erweichungspunkt : 54-59.

Ansatz : Verwendung von 75 Gew.-% Asphaltbeton-Recycling-Material ; 25 Gew.-% Frischgut.

Zusammensetzung des Recycling-Materials :

Bitumengehalt : ca. 6,0 Gew.-%
Bitumenqualität : Penetration 20-30 ; Erweichungspunkt : 59-67
Kalkmehl : ca 15,6 Gew.-%
Sand 0/2 ca 39,3 Gew.-%
Splitt 2/5 ca 25,7 Gew.-%
Splitt 5/8 ca. 13,4 Gew.-%

Zur Herstellung von 1 000 kg Gußasphalt 0/8 sind erforderlich :

| Recycling-Material (Asphaltbeton-Fräsgut) | Frischgut | Gesamt |
|---|---|---|
| 45 kg Bitumen der angegebenen Qualität | 31 kg Bitumen B 80 | 76 kg Bitumen B 45 |
| 118 kg Kalkmehl | 114 kg Kalkmehl | 232 kg Kalkmehl |
| 294 kg Sand 0/2 | ---- | 294 kg Sand 0/2 |
| 193 kg Splitt 2/5 | ---- | 193 kg Splitt 2/5 |
| 100 kg Splitt 5/8 | 105 kg Splitt 5/8 | 205 kg Splitt 5/8 |
| 750 kg Asphalt-Fräsgut | 250 kg Frischgut | 1000 kg Gußasphalt |

Der so aufgebaute Gußasphalt enthält :

7,6 Gew.-% Bitumen ; Penetration 41 ; Erweichungspunkt 55.
23,2 Gew.-% Kalkmehl
29,4 Gew.-% Sand 0/2
19,3 Gew.-% Splitt 2/5
20,5 Gew.-% Splitt 5/8

B 80 = Penetration 70-100 ; Erweichungspunkt 44-49
B 25 = Penetration 20-30 ; Erweichungspunkt 59-67

Wie das vorstehende Beispiel zeigt, lag hier ein Asphaltbeton-Recycling-Material als Fräsgut vor, das ausreichende Mengen Sand (0/2) und Splitt (2/5) enthält.

Es versteht sich, daß in Abhängigkeit von der Qualität des Recycling-Materials und der vorgesehenen Aufgabe bzw. Einsatzbereich des herzustellenden Gußasphalts zusätzliche Anteile an Sand oder Brechsand sowie Gesteinsfraktionen im Splittbereich, also z. B. Splitt 2/5, 5/8, 8/11 oder 11/16 eingearbeitet werden müssen.

In jedem Falle aber ist die Zugabe von Füllermaterial mit dem Frischgut erforderlich, da Asphaltbeton im allgemeinen ca. 10 Gew.-% Füller enthält — der somit auch im hier beispielhaft genommenen Fräsgut enthalten ist — während der Fülleranteil bei Gußasphalt stets um 25 Gew.-% bzw. darüber liegt.

Eine Anlage zur Durchführung des erfindungsgemäßen Verfahrens zur Herstellung von Gußasphalt aus Asphaltbeton-Recycling-Material und Frischgut besteht im Prinzip aus der Asphaltbetonaufbereitung (Brechanlage, Trockner bzw. Erwärmer bis auf ca. 150-230 °C,· Wiege- bzw. Dosier-vorrichtung) ; der Vorbereitung frischen Gesteinsmaterials (Sieb- und Trockenanlage für Splitt ; Trockentemperatur bis ca. 300 °C, Kornfraktionierung, Wiege- und Dosiervorrichtung) ; einem Silo für Kalkmehl einschließlich Wiege- und Dosiereinheit sowie der Bitumenvorlage, die bei ca. 200 bis 240 °C gehalten wird.

Zur Herstellung des im vorstehenden Beispiel definierten Gußasphalts werden in abgestimmten Verhältnissen Asphaltbeton-Fräsgut mit einer Temperatur von ca. 200 °C (75 Gew.-% des Endprodukts), Splitt 5/8 einer Temperatur von ca. 300 °C (10,5 Gew.-% des Endprodukts) und Kalkmehl von Umgebungstemperatur (11,4 Gew.-% des Endprodukts) kontinuierlich oder diskontinuierlich in einer geeigneten Vorrichtung vermischt und gleichzeitig mit Bitumen (3,1 Gew.-% des Endprodukts, ca. 200 °C) aus der Vorlage besprüht.

· Der Mischvorgang ist aufgrund der Beschaffenheit der Komponenten und deren Temperaturen bereits nach einer Minute beendet, vorausgesetzt, daß der Mischvorgang insgesamt bei einer Durchschnittstemperatur (im Mischer) von ca. 200 bis 250 °C erfolgt und nach Möglichkeit einem sehr intensiven Mischprozeß unterliegt.

In großtechnischer Anlage können somit — kontinuierlich oder diskontinuierlich — im allgemeinen bis zu 60 Tonnen Gußasphalt/h aus Asphaltbeton-Recycling-Material hergestellt werden.

Diese Kapazitätsangaben sind Richtwerte. Praxisnahe Ermittlungen haben ergeben, daß Anlagen mit einem Vielfachen dieser Leistung durchaus realisierbar sind.

Die vorstehenden Daten gelten für ein Asphaltbeton-Fräsgut, welches ein Bitumen der Beschaffenheit B 25 (Penetration 20-30 ; Erweichungspunkt 59-67) enthält und das zu 75 Gew.-% am Aufbau des Gußasphalts beteiligt ist.

Es versteht sich, daß bei geringeren Anteilen an Recycling-Material im Endprodukt sowie anderen Bitumenqualitäten und- anteilen in diesem Material andere Mengenanteile auch des Gesteins und Kalkmehls im Frischgut zu wählen sind. Für die richtige Einstellung des Bitumens — aus Bitumen im Asphaltbeton-Recycling-Material und frischem Bitumen — genügt die Einhaltung bekannter Mischungsdiagramme für Normen-Bitumen nach DIN 1995 bzw. die entsprechenden Diagramme für Normen-Bitumen mit geblasenem Bitumen oder Hochvakuumbitumen (HVB).

Durch die einwandfreie Verarbeitung des sehr hohen Anteils an Asphaltbeton-Recycling-Material von 75 Gew.-% gemäß vorstehendem Beispiel zeigt sich, welch hohe wirtschaftliche Bedeutung dem neuen Verfahren zukommt. Aus einem sonst nur·in begrenzten Mengen wiederverwertbaren und bisher nur der Rückformung zugeführten Straßenbaumaterial, nämlich Asphaltbeton-Recycling-Material, kann nun mit einem Altmaterialanteil bis zu 80 Gew.-% ein Gußasphalt gewonnen werden, der aufgrund seiner hohen Qualität vielfach verwertbar ist.

Es sei abschließend noch darauf hingewiesen, daß der nach dem Verfahren der Erfindung erzeugte Gußasphalt -genau wie ausschließlich aus frischem Ausgangsmaterial erzeugte Gußasphalt- in bekannter Weise durch Zusatz organischer Polymere und Copolymere modifiziert werden kann, sodaß sich sein Anwendungsbereich durch Veränderung gewisser rheologischer Eigenschaften noch erweitert. Dabei haben sich Zusätze von z. B. zwischen 1,0 und 5,0 %, insbesondere 1,5 und 3,5 % -bezogen auf das Gesamtbitumen im Endproduktan Styrol-Butadien-Copolymeren oder Alkylen-Vinylester-Copolymeren hervorragend bewährt, um z. B. die thermische Stabilität (bei niedrigen und hohen Temperaturen) und die Flexibilität zu verbessern.

Entsprechend können auch Naturasphalte, d. h. in der Natur vorkommende Gemische aus Bitumen und Mineralstoffen wie z. B. Trinidad-Asphalt, in gereinigtem Zustand als Trinidad-Epuré mit 53 bis 55 Gew.-% eines relativ harten Bitumens bezeichnet, ´eingesetzt werden. Obwohl Trinidad-Zusätze zu Asphaltbetonmischungen nur teilweise greifbare Ergebnisse erbracht haben, zeigten sie sich als Zusatz zu den aus Asphaltbeton-Recycling-Material durch Umformen gemäß der Erfindung gewonnenem Gußasphalt besonders wertvoll, da hierdurch auch solche Straßenbaubitumina im Frischgut eingesetzt werden können, die als besonders « weich » einzustufen sind.

Ausserdem hat sich gezeigt, daß durch Zusatz von Trinidad-Epuré bei kritischer Füllerauswahl und - menge die Stand-und Verschleißfestigkeit des Gußasphalts aus Asphaltbeton-Recycling-Material erheblich verbessert wird.

## Patentansprüche

1. Verfahren zur Herstellung von Gußasphalt unter Mitverwendung von bitumenhaltigem Recycling-Material, dadurch gekennzeichnet, daß als Recycling-Material Asphaltbeton in aufgebrochener, aufgelockerter oder abgefräster Form verwendet wird, daß vor oder nach der Aufbrechung, Auflockerung oder Abfräsung des alten Asphaltbeton dessen Bitumenqualität und -quantität ermittelt wird, hieraus und ggf. aus den Anteilen und physikalischen Beschaffenheit der mineralischen Bestandteile des Asphaltbeton das zum Umformen des Asphaltbeton-Recycling-Material in Gußasphalt erforderliche Frischgut ermittelt, das Asphaltbeton-Recycling-Material auf Korngrößenzwischen 0,2 und 100 mm, insbesondere 10 und 40 mm zerkleinert, anschließend auf ca. 200 °C erhitzt, das zunächst nur die fehlenden mineralischen Bestandteile enthaltende Frischgut in der zum Aufbau von Gußasphalt ermittelten Menge Splitt, Sand und Füller auf eine Temperatur von 200 bis 250° erhitzt, bei dieser Temperatur das Recycling-Material und das nur mineralische Bestandteile enthaltende Frischgut vermischt und diese Mischung bei der gegebenen Temperatur mit soviel Bitumen definierter Beschaffenheit versetzt wird, daß ein Gußasphalt entsteht, dessen Bitumenanteil zwischen 6,5 und 8,0 insgesamt liegt und dessen Bitumen, gebildet aus Bitumen aus Asphaltbeton-Recycling-Material und Frischbitumen, eine Penetration von max. 70 und einen Erweichungspunkt von max. 60 aufweist, wobei die Menge des Asphaltbeton-Recycling-Materials im Endprodukt (Gußasphalt) zwischen ca. 20 und 80 Gew.-% beträgt.

2. Verfahren nach Anspruch 1, dadurch gekennzeichnet, daß das im Asphaltbeton-Recycling-Material enthaltene Bitumen eine Penetration unter 50 (25 °C/mm$^{-1}$) und einen Erweichungspunkt über 54 (R + K), insbesondere eine Penetration zwischen 20 und 30 und einen Erweichungspunkt von über 59 aufweist.

3. Verfahren nach Ansprüchen 1 oder 2, dadurch gekennzeichnet, daß das zum Umformen des Asphaltbeton-Recycling-Material in Gußasphalt eingesetzte Bitumen einen Brechpunkt (FRAASS) im Bereich von —6 °C aufweist.

4. Verfahren nach Ansprüchen 1 oder 2, dadurch gekennzeichnet, daß das zum Umformen des Asphaltbeton-Recycling-Material in Gußasphalt eingesetzte Bitumen einen Brechpunkt (FRAASS) im Bereich von + 8 °C aufweist.

5. Verfahren nach Anspruch 4, dadurch gekennzeichnet, daß Hochvakuum-Bitumen (HVB) verwendet wird.

6. Verfahren nach einem der Ansprüche 1-4, dadurch gekennzeichnet, daß Hart- oder Verschnittbitumen verwendet wird.

7. Verfahren nach Ansprüchen 1-6, dadurch gekennzeichnet, daß die Menge und Eigenschaft des zum Umformen verwendeten Bitumens so eingestellt wird, daß der erhaltene Gußasphalt ein Gesamtbitumen einer Penetration zwischen 35 und 68 sowie einen Erweichungspunkt zwischen 49 und 54 aufweist.

8. Verfahren nach einem der Ansprüche 1-7, dadurch gekennzeichnet, daß für den Umformprozess Asphaltbeton-Recycling-Material in Gußasphalt ein Frischgut verwendet wird, das in Abhängigkeit vom Aufbau des Recycling-Materials unterschiedliche Anteile Sand, Brechsand, Splitt der Fraktionen 0/2, 2/5, 5/8, 8/11 oder 11/16 und Füller, insbesondere Kalkstein, enthält.

9. Verfahren nach einem der Ansprüche 1-8, dadurch gekennzeichnet, daß die Mischung aus Asphaltbeton-Recycling-Material, Frischgut und Frischbitumen zwischen 1,0 und 5,0, gew% insbes. zwischen 1,5 und 3,5 Gew.-%, bezogen auf das Gesamtbitumen, eines organischen Polymeren oder Copolymeren wie Polyalkylenoxyde, Alkylen-Vinylester-Copolymere, Styrol-Butadien-Copolymere, Butadien-Styrol-Acrylat-Terpolymer usw. enthält.

10. Verfahren nach einem der Ansprüche 1-9, dadurch gekennzeichnet, daß als Frischbitumen eine Mischung aus zwei oder mehreren Bitumenqualitäten eingesetzt werden.

11. Verfahren nach Anspruch 10, dadurch gekennzeichnet, daß Naturasphalte wie Trinidad-Epuré zugesetzt werden.

12. Verwendung des Gußasphalts gemäß Ansprüchen 1-11 für den Aufbau von Estrich.

13. Verwendung des Gußasphalts nach Ansprüchen 1-11 für den Aufbau von Wärme- oder Kälteträger führenden Fußbodenbelägen.

**Claims**

1. A process for the production of mastic asphalt with thè use of bitumen-containing recycling material, characterized in that asphalt concrete in broken-up, loosened-up or milled form is employed as recycling material, in that, before or after the breaking-up, loosening-up or milling of the old ashpalt concrete whose bitumen quality and quantity are being determined, the fresh material required for the conversion of the asphalt concrete recycling material into mastic asphalt is determined therefrom and if appropriate from the proportions and physical quality of the mineral components of the asphalt, the asphalt concrete recycling material is comminuted to grain sizes between 0.2 and 100 mm, preferably between 10 and 40 mm, and subsequently heated to approximately 200 °C, the fresh material initially containing only the absent mineral component is heated to a temperature of 200 to 250° in the quantity of chippings, sand and filler determined for the formation of mastic asphalt, at this temperature the recycling material and the fresh material containing only mineral components are mixed and this mixture is mixed at the given temperature with such a quantity of bitumen of defined quality that a mastic asphalt is produced whose the bitumen proportion is from 6.5 to 8.0 in total and whose bitumen is made up of bitumen derived from asphalt concrete recycling material and fresh bitumen and has a penetration of at most 70 and softening point of at most 60, the quantity of the asphalt concrete recycling material in the end product (mastic asphalt) being from about 20 % to 80 % by weight.

2. A process according to claim 1, characterized in that the bitumen contained in the asphalt concrete recycling material exhibits a penetration of less than 50 (25 °C/mm$^{-1}$) and a softening point of more than 54 (R + K), preferably a penetration of from 20 to 30 and a softening point of more than 59.

3. A process according to claim 1 or 2, characterized in that the bitumen employed for the conversion of the asphalt concrete recycling material into mastic asphalt has a breaking point (FRAASS) in the region of — 6 °C.

4. A process according to claim 1 or 2, characterized in that the bitumen employed for the conversion of the asphalt concrete recycling material into mastic asphalt has a breaking point (FRAASS) in the region of + 8 °C.

5. A process according to claim 4, characterized in that high-vacuum bitumen (HVB) is used.

6. A process according to any one of claims 1 to 4, characterized in that hard bitumen or cut-back bitumen is used.

7. A process according to claims 1 to 6, characterized in that the quantity and quality of the bitumen employed for the conversion are adjusted so that the mastic asphalt obtained exhibits a total bitumen having a penetration of from 36 and 68 and a softening point of from 49 to 54.

8. A process according to any one of claims 1 to 7, characterized in that for the process of the conversion of asphalt concrete recycling material into mastic asphalt a fresh material is employed, which contains differing proportions of sand, crushed sand, chippings of the fractions 0/2, 2/5, 5/8, 8/11 or 11/16 and fillers, preferably limestone, depending on the structure of the recycling material.

9. A process according to any one of claims 1 to 8, characterized in that the mixture of asphalt concrete recycling material, fresh material and fresh bitumen contains from 1.0 to 5.0 % by weight, preferably from 1.5 to 3.5 % by weight, related to the total bitumen, of an organic polymer or copolymer, such as polyalkylene oxide, alkylene-vinyl ester copolymer, styrene-butadiene copolymer, butadienestyrene-acrylate terpolymer etc.

10. A process according to any one of claims 1 to 9, characterized in that a mixture of two or more bitumen qualities is employed as fresh bitumen.

11. A process according to claim 10, characterized in that a natural asphalt such as Trinidad-Epuré is added.

12. The use of the mastic asphalt according to claims 1 to 11 for the formation of screed.

13. The use of the mastic asphalt according to claim 1 to 11 for the formation of floor coverings conducting heating agents or cooling agents.


## Revendications

1. Procédé de fabrication d'asphalte à couler à partir de matériau de recyclage bitumineux, caractérisé par le fait que comme matériau de recyclage, on utilise du béton asphaltique obtenu par défonçage, par ramollissement ou par découpe à la fraise, par le fait que l'on établit avant le défonçage, le ramollissement ou la découpe par fraisage de l'ancien béton asphaltique, la qualité et la quantité du bitume qu'il contient, par le fait qu'on obtient, à partir de cela et le cas échéant sur la base des proportions et de la nature physique des composants minéraux du béton asphaltique, le produit frais requis pour transformer le béton asphaltique de recyclage en asphalte à couler, par le fait que l'on concasse le béton asphaltique de recyclage jusqu'à une granulométrie de 0,2 à 100 mm, en particulier entre 10 et 40 mm, par le fait qu'on le chauffe ensuite jusqu'à environ 202 °C, par le fait que l'on chauffe jusqu'à une température de 200 à 250° la quantité établie de gravier, de sable et de filler pour la réalisation d'asphalte à couler et constituant le produit frais ne contenant d'abord que les composants minéraux manquants, que l'on mélange à cette température le matériau de recyclage avec le produit frais contenant seulement les composants minéraux et que l'on ajoute à ce mélange, à la température donnée, une quantité de bitume de nature définie de façon à produire un asphalte à couler dont la teneur en bitume se situe globalement entre 6,5 et 8,2 et dont le bitume, constitué par du bitume venant du béton asphaltique de recyclage et du bitume frais, présente une pénétration de 70 au maximum et un point de ramollissement de 60 au maximum, la quantité de béton asphaltique de recyclage contenue dans le produit final, l'asphalte à couler, se situant entre 20 et 80 % en poids.

2. Procédé selon la revendication 1, caractérisé par le fait que le bitume contenu dans le béton asphaltique de recyclage présente une pénétration inférieure à 50 (25 °C/mm$^{-1}$) et un point de ramollissement supérieur à 54 (R + K), en particulier une pénétration comprise entre 20 et 30 et un point de ramollissement supérieur à 59.

3. Procédé selon les revendications 1 ou 2, caractérisé par le fait que la température du point de fragilité d'après FRAASS du bitume utilisé pour transformer le béton asphaltique en asphalte à couler se situe aux environs de — 6 °C.

4. Procédé selon les revendications 1 ou 2, caractérisé par le fait que la température du point de fragilité d'après FRAASS du bitume utilisé pour transformer le béton asphaltique en asphalte à couler se situe aux environs de + 8 °C.

5. Procédé selon la revendication 4, caractérisé par le fait qu'on utilise du bitume traité sous vide poussé (HVB).

6. Procédé selon l'une des revendications 1 à 4, caractérisé par le fait que l'on utilise du bitume dur ou du bitume fluxé (cut-back).

7. Procédé selon les revendications 1 à 6, caractérisé par le fait que la quantité et la propriété du bitume utilisé pour la transformation sont réglées de telle sorte que l'asphalte à couler obtenu contient un bitume global dont la pénétration est comprise entre 35 et 68 et le point de ramollissement entre 49 et 54.

8. Procédé selon l'une des revendications 1 à 7, caractérisé par le fait que pour le processus de transformation de béton asphaltique de recyclage en asphalte à couler, on utilise un produit frais qui contient, en fonction de la structure du matériau de recyclage, des proportions différentes de sable, de gravier, de gravillons, de granulométries 0/2, 2/5, 5/8, 8/11 ou 11/16 et du filler en particulier du calcaire.

9. Procédé selon l'une des revendications 1 à 8, caractérisé par le fait que le mélange en béton asphaltique à recycler, produit frais et bitume frais contient entre 1,0 et 5,0 % en poids, en particulier entre 1,5 et 3,5 % en poids, par rapport au bitume global, d'un polymère organique ou d'un copolymère tel que des oxydes de polyalkyle, des copolymères alkylène-ester vinylique, des copolymères de styrène-butadiène, des terpolymères de butadiène-styrène-acrylate, etc.

10. Procédé selon l'une des revendications 1 à 9, caractérisé par le fait que l'on utilise en qualité de bitume frais, un mélange fait de deux ou de plusieurs qualités de bitume.

11. Procédé selon la revendication 10, caractérisé par le fait que l'on ajoute des asphaltes naturels tels que du Trinidad-Epuré.

12. Utilisation de l'asphalte à couler selon les revendications 1 à 11 pour la réalisation d'une chape sans joint.

13. Utilisation de l'asphalte à couler selon les revendications 1 à 11, pour la réalisation de revêtements de sol conduisant des fluides chauffants ou réfrigérants.